# EUROPÄISCHE PATENTSCHRIFT

(11) **EP 4 228 923 B1**
(45) Veröffentlichungstag und Bekanntmachung des Hinweises auf die Patenterteilung: **25.06.2025**
(21) Anmeldenummer: 21782711.2
(22) Anmeldetag: 22.09.2021
(51) Int. Cl.: B60Q 1/00, B60Q 1/14, F21S 41/16, F21S 41/153, F21S 41/13

(54) **BELEUCHTUNGSVORRICHTUNG FÜR EINEN KRAFTFAHRZEUGSCHEINWERFER**
LIGHTING DEVICE FOR A MOTOR VEHICLE HEADLIGHT
DISPOSITIF D'ÉCLAIRAGE POUR UN PHARE DE VÉHICULE AUTOMOBILE

(30) Priorität: 19.10.2020 EP 20202590
(43) Veröffentlichungstag der Anmeldung: 23.08.2023
(73) Patentinhaber: ZKW Group GmbH, 3250 Wieselburg (AT)
(72) Erfinder: HARTMANN, Peter, 3392 Schönbühel an der Donau (AT); ARTMANN, Matthäus, 3370 Ybbs an der Donau (AT); BRANDSTETTER, Martin, 3370 Ybbs an der Donau (AT)
(74) Vertreter: Patentanwaltskanzlei Matschnig & Forsthuber OG
(86) Internationale Anmeldenummer: PCT/EP2021/076029
(87) Internationale Veröffentlichungsnummer: WO 2022/083959

(56) Entgegenhaltungen:
- EP-A1- 1 553 429
- EP-A1- 2 380 774
- WO-A1-02/04247
- DE-A1- 102007 040 042
- DE-A1- 102011 006 554
- US-A1- 2020 055 440

## Beschreibung

Die Erfindung betrifft eine Beleuchtungsvorrichtung für einen Kraftfahrzeugscheinwerfer zum Erkennen und gezielten Ausblenden eines vor der Beleuchtungsvorrichtung vorhandenen, Licht abstrahlenden Objekts in einer segmentierten Lichtverteilung, welche Beleuchtungsvorrichtung Folgendes umfasst:
- eine Lichterzeugungseinheit, welche mehrere Leuchtpixel umfasst, welche in einem Leuchtpixel-Array in Zeilen und Spalten angeordnet sind, wobei die Lichterzeugungseinheit eingerichtet ist, eine segmentierte Lichtverteilung in eine Hauptabstrahlrichtung vor der Beleuchtungsvorrichtung abzustrahlen,
- eine Lichtsensorvorrichtung zum Erkennen von Licht eines Licht abstrahlenden Objekts mit einem ersten Lichtsensor, welcher erste Lichtsensor mehrere erste Sensorpixel aufweist, welche in einer Zeile angeordnet sind, wobei die ersten Sensorpixel eingerichtet sind, Lichtstrom von auf den ersten Lichtsensor einfallendem Licht in einem Wellenlängenbereich von 380 nm bis 780 nm zu erfassen,
- eine Steuereinheit, welche mit der Lichterzeugungseinheit und der Lichtsensorvorrichtung verbunden ist und eingerichtet ist, die Lichterzeugungseinheit zur Erzeugung der segmentierten Lichtverteilung anzusteuern.

Ferner betrifft die Erfindung einen Kraftfahrzeugscheinwerfer mit zumindest einer erfindungsgemäßen Beleuchtungsvorrichtung.

ADB-Systeme beziehungsweise ADB-Kraftfahrzeugscheinwerfer umfassen gewöhnlich eine Umgebungsaufnahmeeinrichtung, wie z.B. eine Kamera oder ein Kamera-System, und ein Kraftfahrzeugscheinwerfer-System. Die - wohl bekannte - Funktionsweise eines ADB-Systems besteht darin, dass das Kraftfahrzeugscheinwerfer-System in Abhängigkeit von Informationen, die die Umgebungsaufnahmeeinrichtung dem Kraftfahrzeugscheinwerfer-System zur Verfügung stellt, die Kraftfahrzeugscheinwerfer steuert und beispielsweise entsprechende Bereiche der mittels der Kraftfahrzeugscheinwerfer erzeugten Lichtverteilung ausblendet oder dimmt.

Bei den ADB-Systemen des Matrixtyps wird ein Ausblend-Bereich meistens mittels Ausschaltens/Abblendens entsprechender Lichtquelle erzeugt. Die vorgenannte Beleuchtungsvorrichtung für einen Kraftfahrzeugscheinwerfer ist vorzugsweise eine Vorrichtung des Matrixtyps.

Insbesondere aus Sicht der Kraftfahrzeugscheinwerfer-Hersteller ist es bei ADB-Systemen nachteilhaft, dass die Umgebungsaufnahmeeinrichtung von dem Kraftfahrzeugscheinwerfer-System baulich getrennt ist. Üblicherweise stammen die vorgenannten wesentlichen Teile eines ADB-Systems von unterschiedlichen Herstellern. Typischerweise weist ein Kraftfahrzeugscheinwerfer-System eine Schnittstelle auf, die zum Einspeisen von seitens der Umgebungsaufnahmeeinrichtung zur Verfügung gestellten Informationen vorgesehen ist. Das führt z.B. dazu, dass ein Kraftfahrzeugscheinwerfer-Hersteller beim Einstellen von Abblendszenarien auf die Informationen angewiesen ist, die von einer extern zur Verfügung gestellten, beispielsweise gekauften Umgebungsaufnahmeeinrichtung geliefert werden. Die genannte Information ist oft in Form von so genannten Objektlisten vorhanden. Solche Objektlisten erzeugt die Umgebungsaufnahmeeinrichtung, indem sie beispielsweise mit dem vorgenannten Kamera-System Bilder in dem Sichtfeld (Engl. "Field of View") des Kamera-Systems aufnimmt, wobei das Sichtfeld vorzugsweise an den relevanten Bereich vor dem Kraftfahrzeug angepasst ist, und diese Bilder mithilfe einer in der Umgebungsaufnahmeeinrichtung vorhandenen Recheneinheit auswertet. Dabei wird unter der Anpassung des Sichtfeldes an den relevanten Bereich verstanden, dass das Sichtfeld einen Öffnungswinkel aufweist, der zur Erfassung zumindest der vor dem Kraftfahrzeug befindlichen Fahrbahn ausreichend groß ist. Als Output liefert die Recheneinheit die vorgenannten Objektlisten. Als Objekte in solchen Listen können beispielsweise Fahrzeuge, wie LKWs, PKWs, Motorräder usw. vorkommen. Jedem einzelnen Objekt werden typischerweise Koordinaten in dem Koordinatensystem des Kamera-Systems zugeordnet. Dieses Ursprungs-Koordinatensystem hat somit oft den Ursprung in etwa an der hinteren Seite des Rückspiegels in dem Innenraum des Kraftfahrzeugs, da dort üblicherweise eine Kamera des Kamera-Systems angeordnet ist.

Wenn nun das Steuersystem als Input eine solche Objektliste bekommt, rechnet es entsprechend der Objektliste ein zu erzeugendes Lichtbild aus. Dabei müssen zunächst die Koordinaten der Objekte in ein Koordinatensystem der Kraftfahrzeugscheinwerfer umgerechnet werden. Dies erfordert relativ hohe Rechenleistung, verursacht relevante Zeitverzögerung und ist eine mögliche Fehlerquelle. Außerdem kommt es oft zu zusätzlichen Fehlern, die durch Fehlerkennung der Objekte seitens der Recheneinheit der Umgebungsaufnahmeeinrichtung entstehen. Ein nicht selten vorkommender Fehler dieser Art ist eine Verwechslung zwischen einem vorausfahrenden LKW und zwei Motorrädern - die Recheneinheit erkennt anhand einer ersten Aufnahme Rückleuchten eines LKW, wobei bei einer zweiten beispielsweise darauffolgenden Aufnahme dieselben Rückleuchten als zwei Motorräder interpretiert werden. Da das Steuersystem des Kraftfahrzeugscheinwerfer-Systems diese Daten nicht beeinflussen kann, kann ein periodisches Auf- und Abblenden eines Bereiches zwischen den Rückleuchten entstehen, je nachdem ob die Rückleuchten in der Objektliste den zwei Motorrädern (Aufleuchten) oder dem LKW (Ausblenden) zugeordnet sind. Dies kann unter Umständen zu einer Blendung des Fahrers aufgrund einer Lichtreflexion führen.

Ferner kann der Fall auftreten, dass beispielsweise ein entgegenkommendes mehrspuriges Kraftfahrzeug mit üblicherweise zwei zueinander beabstandeten Kraftfahrzeugscheinwerfern lediglich als zwei von einander unabhängige Lichtquellen von der Sensoreinheit wahrgenommen werden, wobei jeweils zwei Sensorpixel des Lichtsensors aufgrund einer Überschreitung eines festlegbaren Lichtstrom-Schwellenwertes "aktiviert" werden, wobei zwischen diesen zwei aktivierten Sensorpixeln ein Sensorpixel liegt, welcher nicht aktiviert wurde. Die Steuereinheit wäre lediglich dazu veranlasst, den Lichtstrom der zu den zwei "aktivierten" Sensorpixeln zugeordneten Leuchtpixel-Gruppen zu reduzieren, wodurch ein Fahrer des entgegenkommenden Fahrzeuges geblendet wird.

Die WO 02/04247 A1, die US 2020/055440 A2, die EP 1 553 429 A1, die DE 10 2011 006554 A1, die DE 10 2007 040042 A1 und die EP 2 380 774 A1 zeigen Beleuchtungsvorrichtungen aus dem Stand der Technik.

Es ist eine Aufgabe der Erfindung eine verbesserte Beleuchtungsvorrichtung bereitzustellen.

Diese Aufgabe wird dadurch gelöst, dass die Lichterzeugungseinheit, die Lichtsensorvorrichtung und die Steuereinheit gemeinsam auf einem Grundträger angeordnet sind, und gemeinsam mit dem Grundträger eine Baueinheit bilden,
wobei die Leuchtpixel des Leuchtpixel-Arrays mehrere Leuchtpixel-Gruppen unterteilt sind, wobei jeweils eine Leuchtpixel-Gruppe ein Segment der segmentierten Lichtverteilung in einem Leucht-Raumwinkel erzeugen kann, wobei jede Leuchtpixel-Gruppe zumindest ein Leuchtpixel umfasst,
und wobei jeweils ein Sensorpixel von den mehreren ersten Sensorpixeln Licht in einem dem jeweiligen Sensorpixel zugeordneten Detektions-Raumwinkel detektieren kann und jeweils einer Leuchtpixel-Gruppe zugeordnet ist, wobei jedem Sensorpixel der mehreren ersten Sensorpixel ein unterschiedlicher Detektions-Raumwinkel zugeordnet ist, wobei die Detektions-Raumwinkel im Wesentlichen aneinander angrenzen und einen Gesamt-Detektions-Raumwinkel bilden, in welchen Licht des Licht abstrahlenden Objekts erkannt werden kann, und wobei das auf jeden ersten Sensorpixel einfallende Licht als dem jeweiligen ersten Sensorpixel zugeordneten Lichtstromwert erfassbar ist,
wobei der von einem ersten Sensorpixel detektierbare Detektions-Raumwinkel im Wesentlichen ident ist mit dem Leucht-Raumwinkel der jeweils zugeordneten Leuchtpixel-Gruppe,
wobei die Beleuchtungsvorrichtung zur Abstandsmessung eines vor der Beleuchtungsvorrichtung vorhandenen Objekts eine Laserstrahlerzeugungseinrichtung aufweist, welche eingerichtet ist, zumindest einen Laserstrahl in einem Wellenlängenbereich von 780 nm bis 1 mm vor die Beleuchtungsvorrichtung abzustrahlen und in horizontaler Orientierung zu verändern,
wobei die Lichtsensorvorrichtung zusätzlich einen zweiten Lichtsensor umfasst, welcher zweite Lichtsensor mehrere zweite Sensorpixel umfasst, welche in einer Zeile angeordnet sind, wobei die zweiten Sensorpixel eingerichtet sind, Lichtstrom im Wellenlängenbereich des Laserstrahls der Laserstrahlerzeugungseinheit von auf den zweiten Lichtsensor einfallendem Licht zu erfassen,
und wobei die Steuereinheit eingerichtet ist, die von den jeweiligen ersten Sensorpixeln detektierten Lichtstromwerte einzeln mit einem jeweils festlegbaren Schwellwert zu vergleichen und bei einem Überschreiten des Schwellenwertes den Lichtstrom der entsprechenden Leuchtpixel-Gruppen zu reduzieren,
wobei im Falle, dass in zwei ersten Detektions-Raumwinkeln ein Überschreiten des Schwellenwertes festgestellt wird und in zumindest einem zwischen dieser zwei Detektions-Raumwinkeln ein Detektions-Raumwinkel keine Überschreitung des Schwellenwertes festgestellt wird, die Steuereinheit eingerichtet ist, eine vermutliche Objektbreite abzuleiten, welche mit der Anzahl der ersten Sensorpixel, welche sich aus den zwei Detektions-Raumwinkeln, bei welchen der Schwellenwert überschritten ist, und den zwischen diesen zwei Detektions-Raumwinkeln liegenden Detektions-Raumwinkeln zusammensetzt, korrespondiert, und mit einer tatsächlichen Objektbreite zu vergleichen, welche tatsächliche Objektbreite mittels einer Laufzeitmessung des an dem Objekt reflektierenden Laserstrahls durch den zweiten Lichtsensor ermittelbar ist,
wobei wenn die vermutliche Objektbreite mit der tatsächlichen Objektbreite übereinstimmt, die Steuereinrichtung eingerichtet ist, den Lichtstrom der entsprechenden Leuchtpixel-Gruppen, welche den ersten Sensorpixeln der vermutlichen Objektbreite zugeordnet sind, trotz eines fehlenden Überschreitens des Schwellenwertes in den Detektions-Raumwinkeln zwischen den Detektions-Raumwinkeln, bei welchen der Schwellenwert überschritten ist, zu reduzieren,
   und/oder
im Falle, dass in einem Detektions-Raumwinkel ein Überschreiten des Schwellenwertes festgestellt wird, die Steuereinheit eingerichtet ist, eine vermutliche Objektbreite abzuleiten, welche mit dem ersten Sensorpixel korrespondiert, bei welchem der Schwellenwert überschritten ist, und mit einer tatsächlichen Objektbreite zu vergleichen, welche tatsächlich Objektbreite mittels einer Laufzeitmessung und/oder Triangulationsmessung des an dem Objekt reflektierenden Laserstrahls durch den zweiten Lichtsensor ermittelbar ist, wobei die tatsächliche Objektbreite mit der Anzahl der zweiten Sensorpixel korrespondiert, bei welcher Licht des an dem Objekt reflektierenden Laserstrahles erfasst wird, wobei wenn
die tatsächlich Objektbreite größer ist als die vermutliche Objektbreite, die Steuereinrichtung eingerichtet ist, den Lichtstrom jener Leuchtpixel-Gruppen zu reduzieren, welche mit dem ersten Sensorpixel, bei welchem der Schwellenwert überschritten wurde, und mit jenen ersten Sensorpixeln korrespondieren, deren Detektions-Raumwinkel unmittelbar benachbart zu jenem Detektions-Raumwinkel ist, bei welchen ein Überschreiten des Schwellenwertes festgestellt wurde, oder den ersten Sensorpixeln, welche mit den zweiten Sensorpixeln korrespondieren, bei welchen die tatsächliche Objektbreite ermittelt wurde.

Bei der Triangulationsmessung ist der Abstand zwischen der Laserstrahlerzeugungseinheit und den einzelnen zweiten Sensorpixeln des zweiten Lichtsensors bekannt, wobei ebenso der Winkel, in welchem der Laserstrahl in seiner zumindest einen Zeile emittiert wird, bekannt ist und durch die Steuereinheit ermittelbar bzw. abrufbar ist. Ferner ist ebenso der Winkel des an dem Objekt reflektierenden Laserstrahls erfassbar, beispielsweise durch den entsprechenden zweiten Sensorpixel des zweiten Lichtsensors und dadurch bekannt, wodurch der Abstand des Bereichs des Objekts, welcher Bereich von dem Laserstrahl getroffen und reflektiert wird, durch die Steuereinheit ermittelbar bzw. ausrechenbar ist.

Es sei angemerkt, dass die tatsächliche Objektbreite jener Anzahl an zweiten Sensorpixeln entsprechen kann, bei welchen Licht des an dem Objekt reflektierenden Laserstrahls erfasst wird. Dabei korrespondieren die zweiten Sensorpixeln mit den ersten Sensorpixeln, wobei die Anzahl der ersten und zweiten Sensorpixeln gleich ist und je einem ersten Sensorpixel genau ein zweiter Sensorpixel zugeordnet ist. Folgend ist auch jedem zweiten Sensorpixel die entsprechende Leuchtpixel-Gruppe des entsprechenden ersten Sensorpixels zugeordnet.

Hierdurch lässt sich auch eine tatsächliche Objektbreit bzw. Objektgröße des vor der Beleuchtungsvorrichtung vorhandenen Objekts bestimmen bzw. ableiten, da durch den in horizontaler Orientierung veränderbaren Laserstrahl mehrere Punkte des Objekts abgetastet bzw. gescannt werden, wodurch die Objektbreite bzw. Objektgröße bestimmbar ist.

Es kann vorgesehen sein, dass der Abstand des Objekts zur Beleuchtungsvorrichtung ermittelbar ist.Ein besonders simpler Aufbau ergibt sich, wenn der Grundträger einstückig ausgebildet ist.

Es kann vorgesehen sein, dass der Grundträger einen Kühlkörper aufweist, an dem der Lichtsensor, das Leuchtmittel und die Steuereinheit angeordnet sind.

Darüber hinaus kann es mit Vorteil vorgesehen sein, dass der Grundträger eine Leiterplatte aufweist, wobei der Lichtsensor, das Leuchtmittel und die Steuereinheit auf der Leiterplatte angebracht sind. Es sei angemerkt, dass in diesem Fall der Lichtsensor, das Leuchtmittel und die Steuereinheit ebenfalls an dem Grundträger angeordnet sind aber mit diesem nicht in Kontakt stehen.

Eine besonders günstige Variante ergibt sich, wenn mehrere Sensorpixel in Form eines in CMOS Technologie gefertigten "Active Pixel Sensors" (APS-CMOS) gruppiert sind, wobei hier einige Peripherischaltungen für die Funktion der Photodiode (A/D-Wandlung, Taktung der Auslesung, Verstärkung) direkt am gleichen Halbleiterbauteil umgesetzt sind.

Bei einer besonders günstigen Variante kann vorgesehen sein, dass ein, insbesondere jedes Leuchtpixel als zumindest eine LED-Lichtquelle ausgebildet ist.

Darüber hinaus ist es denkbar, dass die Steuereinheit mindestens zwei, vorzugsweise genau zwei Mikrocontroller umfasst, die miteinander zur Kommunikation verbunden sind, wobei vorzugsweise ein erster Mikrocontroller eingerichtet ist, den Lichtsensor zu steuern und vorzugsweise ein zweiter Mikrocontroller dazu eingerichtet ist, das Leuchtmittel zu steuern.

Dabei kann es vorteilhaft sein, wenn zumindest einer dieser Microcontroller unmittelbar mit dem photoaktiven Sensorelement verbunden, z.B. direkt hinter diesem im selben Elektronikbauteilgehäuse ("Chip-package") platziert, ist und sensorbezogene Datenvorverarbeitung ausführt. Diese Vorverarbeitung umfasst beispielsweise den Vergleich von Messwerten zwischen Pixeln untereinander und mit hinterlegten Werten bzw. die Auswahl und Ansteuerung von hinterlegten Auswertecharakteristiken (Ausleserate, Belichtungszeiten, Verstärkung).

Es kann vorgesehen sein, dass jeweils ein Sensorpixel von den mehreren zweiten Sensorpixeln Licht in einem dem jeweiligen Sensorpixel zugeordneten Erkennungs-Raumwinkel detektieren kann und jeweils einem Sensorpixel der mehreren ersten Sensorpixel zugeordnet ist, wobei der Erkennungs-Raumwinkel dieses zweiten Sensorpixels im Wesentlichen ident zum entsprechenden Detektions-Raumwinkel des ersten Sensorpixels ist.

Es kann vorgesehen sein, dass der Laserstrahl der Laserstrahlerzeugungseinrichtung scannend vor der Beleuchtungsvorrichtung in zumindest einer horizontalen Zeile emittierbar ist.

Laserscanning, auch Laserabtastung genannt, bezeichnet das zeilen- oder rasterartige Überstreichen von Oberflächen oder Körpern mit einem Laserstrahl, um diese zu vermessen, zu bearbeiten oder um ein Bild zu erzeugen.

Es kann vorgesehen sein, dass der Laserstrahl in zumindest zwei, vorzugsweise vier, Zeilen emittierbar ist, wobei der Laserstrahl jeweils nur eine der zumindest zwei Zeilen scannend emittierbar ist.

Es kann auch vorgesehen sein, dass mehrere Laserstrahlerzeugungseinheiten umfasst sind, die abwechselnd Zeilen in unterschiedlichem vertikalen Abstand scannen bzw. emittieren.

Es kann vorgesehen sein, dass die Anzahl der ersten Sensorpixel gleich der Anzahl der zweiten Sensorpixel ist.

Es kann vorgesehen sein, dass die Steuereinheit eingerichtet ist, den Abstand des vor der Beleuchtungsvorrichtung vorhandenen lichtabstrahlenden Objekts zur Beleuchtungsvorrichtung mittels einer Laufzeitmessung mit Hilfe des zweiten Lichtsensors zu ermitteln.

Es kann vorgesehen sein, dass die segmentierte Lichtverteilung als segmentierte Fernlichtverteilung ausgebildet ist.

Es kann vorgesehen sein, dass die Beleuchtungsvorrichtung zur Aufweitung des Laserstrahls der Lasererzeugungseinheit eine Aufweitungsoptik umfasst.

Es kann vorgesehen sein, dass die Aufweitungsoptik als Zylinderlinse ausgebildet ist, welche eingerichtet ist, den Laserstrahl der Laserstrahlerzeugungseinrichtung in vertikaler Richtung aufzuweiten.

Dadurch soll ein größerer Bereich in vertikaler Richtung abgedeckt werden.

Es kann vorgesehen sein, dass die ersten Sensorpixeln und die zweiten Sensorpixeln in Einbaulage der Beleuchtungsvorrichtung übereinander in jeweils einer Zeile auf einer gemeinsamen Leiterplatte angeordnet sind und besonders bevorzugt, dass die ersten Sensorpixel und die zweiten Sensorpixel auf dem selben Sensorchip, welcher beispielsweise in CMOS Technologie gefertigt ist, angeordnet sind, und wobei die Beleuchtungsvorrichtung eine Sensorlinse umfasst, welcher den ersten und zweiten Sensorpixeln zugeordnet ist.

Es kann vorgesehen sein, dass die Linse als Zylinderlinse ausgebildet ist.

Die gemeinsame Sensorlinse ist asymmetrisch und beispielsweise als Zylinderlinse ausgebildet, um in horizontaler Richtung eine örtliche Auflösung zu gewährleisten, nicht aber im vertikalen Bereich. Ein Sensorpixel betrachtet den gesamten vertikalen Bereich in einer bestimmten horizontalen Richtung.

Dadurch ist eine gute Auflösung in horizontaler Richtung gewährleistet, aber keine Auflösung in vertikaler Richtung. Die Zylinderlinse ermöglicht, dass ich ein gewisser vertikaler Bereich abgedeckt ist; die Auflösung in vertikaler Richtung für die Abstandsmessung erhält man durch den zumindest einen Laserstrahler der Laserstrahlerzeugungseinrichtung, welcher auch abwechselnd in vertikal gestapelte Zeilen emittierbar ist.

Es sei angemerkt, dass bei Vorhandsein von mehreren Zeilen bzw. die Zeilenbereiche, welche abwechselnd von einem Laserstrahl gescannt werden, aneinander angrenzen und sich nicht überlagern.

Es kann vorgesehen sein, dass die ersten Sensorpixeln einen ersten Filter aufweisen, welcher eingerichtet ist, Licht ausschließlich im Wellenlängenbereich von 380 nm bis 780 nm zu transmittieren, wobei die zweiten Sensorpixel einen zweiten Filter aufweisen, welcher eingerichtet ist, Licht ausschließlich im Wellenlängenbereich von 780 nm bis 12 µm zu transmittieren.

Es kann vorgesehen sein, dass der zumindest eine Laserstrahl der Laserstrahlvorrichtung moduliert ist.

Die Aufgabe wird ebenso gelöst durch einen Kraftfahrzeugscheinwerfer mit zumindest einer erfindungsgemäßen Beleuchtungsvorrichtung.

Nachfolgend wird die Erfindung anhand von beispielhaften Zeichnungen näher erläutert. Hierbei zeigt
Fig. 1 eine beispielhafte Beleuchtungsvorrichtung mit einer Lichterzeugungseinheit mit mehreren Leuchtpixel-Gruppen, einer Lichtsensorvorrichtung mit einem ersten und zweiten Lichtsensor, einer Laserstrahlerzeugungseinrichtung und einer die Lichterzeugungseinheit und Lichtsensorvorrichtung ansteuerbare Steuereinheit,
Fig. 2 eine beispielhafte Darstellung eines durch die Laserstrahlerzeugungseinrichtung erzeugbaren Laserstrahls, welcher in mehreren Zeilen in seiner horizontalen Orientierung veränderbar ist,
Fig. 3 eine beispielhafte Fahrsituation mit einem entgegenkommenden Fahrzeug,
Fig. 4 eine auf die Fahrsituation aus Fig. 3 entsprechende Ansteuerung der Sensorpixel des ersten und zweiten Lichtsensors, und eine entsprechende Ansteuerung der Lichtpixelgruppen.

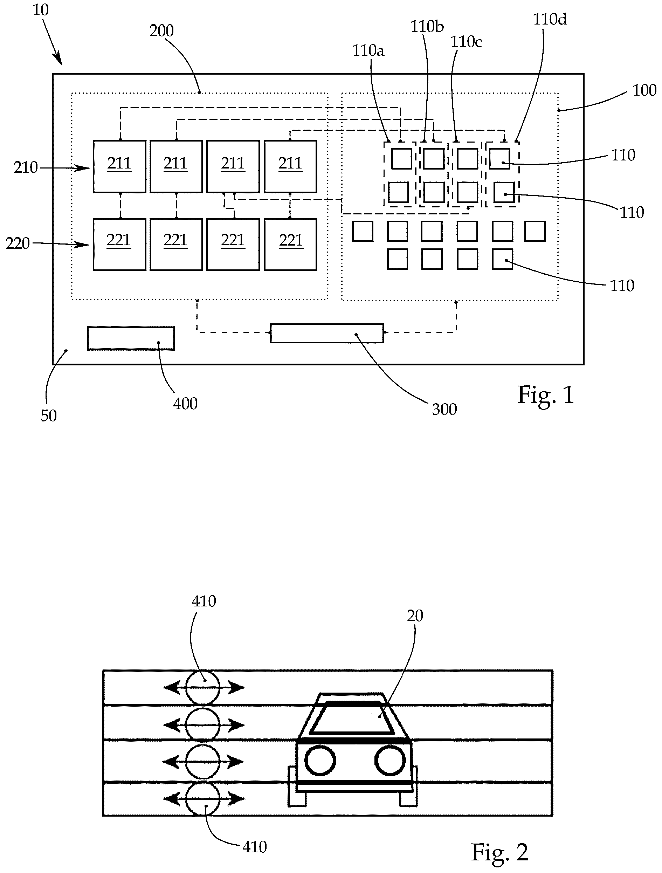

**Fig. 1** zeigt eine beispielhafte Beleuchtungsvorrichtung **10** für einen Kraftfahrzeugscheinwerfer zum Erkennen und gezielten Ausblenden eines vor der Beleuchtungsvorrichtung **10** vorhandenen, Licht abstrahlenden Objekts **20** in einer segmentierten Lichtverteilung, beispielsweise eine Fernlichtverteilung, welche Beleuchtungsvorrichtung **10** eine Lichterzeugungseinheit **100** umfasst, welche mehrere Leuchtpixel **110** aufweist, welche in einem Leuchtpixel-Array in Zeilen und Spalten angeordnet sind, wobei die Lichterzeugungseinheit **100** eingerichtet ist, eine segmentierte Lichtverteilung in eine Hauptabstrahlrichtung vor der Beleuchtungsvorrichtung **10** abzustrahlen.

Ferner umfasst die Beleuchtungsvorrichtung **10** eine Lichtsensorvorrichtung **200** zum Erkennen von Licht eines Licht abstrahlenden Objekts **20** mit einem ersten Lichtsensor **210,** welcher erste Lichtsensor **210** mehrere erste Sensorpixel **211** aufweist, welche in einer Zeile angeordnet sind, wobei die ersten Sensorpixel **211** eingerichtet sind, Lichtstrom von auf den ersten Lichtsensor **210** einfallendem Licht in einem Wellenlängenbereich von 380 nm bis 780 nm, also sichtbares Licht, zu erfassen.

Weiters umfasst die Beleuchtungsvorrichtung **10** eine Steuereinheit **300,** welche mit der Lichterzeugungseinheit **100** und der Lichtsensorvorrichtung **200** verbunden ist und eingerichtet ist, die Lichterzeugungseinheit **100** zur Erzeugung der segmentierten Lichtverteilung anzusteuern, und wobei die Lichterzeugungseinheit **100,** die Lichtsensorvorrichtung **200** und die Steuereinheit **300** gemeinsam auf einem Grundträger **50** angeordnet sind, und gemeinsam mit dem Grundträger **50** eine Baueinheit bilden.

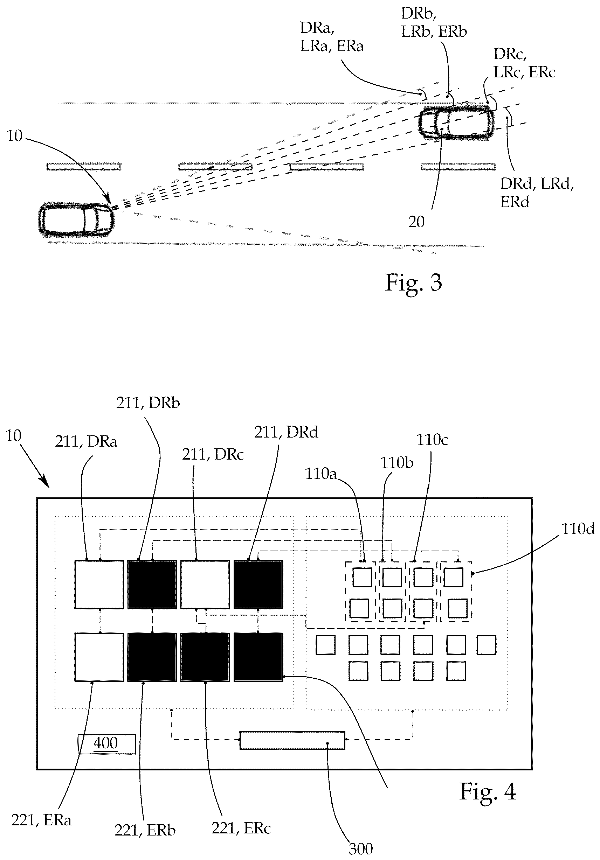

Die Leuchtpixel **110** des Leuchtpixel-Arrays sind in mehrere Leuchtpixel-Gruppen **110a, 110b, 110c, 110d** unterteilt, wobei jede Leuchtpixel-Gruppe zumindest ein Leuchtpixel **110** umfasst, und wobei jeweils eine Leuchtpixel-Gruppe **110a, 110b, 110c, 110d** ein Segment der segmentierten Lichtverteilung in einem Leucht-Raumwinkel **LRa, LRb, LRc, LRd** erzeugen kann, wie beispielsweise in **Fig. 3** schematisch zu sehen ist.

Jeweils ein Sensorpixel von den mehreren ersten Sensorpixeln **211** des ersten Lichtsensors **210** kann Licht in einem dem jeweiligen Sensorpixel **211** zugeordneten Detektions-Raumwinkel **DRa, DRb, DRc, DRd** - ebenfalls zu sehen in **Fig. 3** **-** detektieren und ist jeweils einer Leuchtpixel-Gruppe **110a, 110b, 110c, 110d** zugeordnet, wobei jedem Sensorpixel der mehreren ersten Sensorpixel **211** ein unterschiedlicher Detektions-Raumwinkel zugeordnet ist.

Die Detektions-Raumwinkel **DRa, DRb, DRc, DRd** grenzen dabei im Wesentlichen aneinander an und bilden einen Gesamt-Detektions-Raumwinkel, in welchen Licht des Licht abstrahlenden Objekts **20** erkannt werden kann, wobei das auf jeden ersten Sensorpixel **211** einfallende Licht als dem jeweiligen ersten Sensorpixel **211** zugeordneten Lichtstromwert erfassbar ist.

Der von einem ersten Sensorpixel **211** detektierbare Detektions-Raumwinkel **DRa, DRb, DRc, DRd** ist im Wesentlichen ident mit dem Leucht-Raumwinkel **LRa, LRb, LRc, LRd** der jeweils zugeordneten Leuchtpixel-Gruppe **110a, 110b, 100c, 110d.**

Zur Abstands- bzw. Größenmessung des vor der Beleuchtungsvorrichtung **10** vorhandenen Objekts **20** umfasst die Beleuchtungsvorrichtung **10** eine Laserstrahlerzeugungseinrichtung **400,** welche eingerichtet ist, zumindest einen Laserstrahl **410** in einem Wellenlängenbereich von 780 nm bis 1 mm vor die Beleuchtungsvorrichtung **10** abzustrahlen und in horizontaler Orientierung zu verändern.

Der Laserstrahl **410** der Laserstrahlerzeugungseinrichtung **400** ist dabei scannend vor der Beleuchtungsvorrichtung **10** in zumindest einer horizontalen Zeile emittierbar, in dem gezeigten Beispiel in **Fig. 2** sind vier Zeilen dargestellt.

Zusätzlich umfasst die Lichtsensorvorrichtung **200** einen zweiten Lichtsensor **220,** welcher mehrere zweite Sensorpixel **221** umfasst, welche in einer Zeile angeordnet sind, wobei die zweiten Sensorpixel **221** eingerichtet sind, Lichtstrom im Wellenlängenbereich des Laserstrahls **410** der Lasererzeugungseinheit **400** von auf den zweiten Lichtsensor **220** einfallendem Licht zu erfassen. Jeweils ein Sensorpixel von den mehreren zweiten Sensorpixeln **221** kann Licht in einem dem jeweiligen Sensorpixel **221** zugeordneten Erkennungs-Raumwinkel **ERa, ERb, ERc, ERd** detektieren und ist jeweils einem Sensorpixel der mehreren ersten Sensorpixel **211** zugeordnet, wobei der Erkennungs-Raumwinkel dieses zweiten Sensorpixels **221** im Wesentlichen ident zum entsprechenden Detektions-Raumwinkel **DRa, DRb, DRc, DRd** des ersten Sensorpixels **211** ist. Die Anzahl der ersten Sensorpixel **211** entspricht dabei der Anzahl der zweiten Sensorpixel **221.**

Die Steuereinheit **300** ist ferner dazu eingerichtet, die von den jeweiligen ersten Sensorpixeln **211** detektierten Lichtstromwerte einzeln mit einem jeweils festlegbaren Schwellwert zu vergleichen und bei einem Überschreiten des Schwellenwertes den Lichtstrom der entsprechenden Leuchtpixel-Gruppen **110a, 110b, 110c, 110d** zu reduzieren.

Im Falle, dass in zwei Detektions-Raumwinkeln **DRb, DRd** ein Überschreiten des Schwellenwertes festgestellt wird und in zumindest einem zwischen dieser zwei Detektions-Raumwinkeln **DRb, DRd** ein Detektions-Raumwinkel **DRc** keine Überschreitung des Schwellenwertes festgestellt wird, wie im in **Fig. 3** und **4** gezeigten Beispiel dargestellt, so ist die Steuereinheit **300** eingerichtet, eine vermutliche Objektbreite des entgegenkommenden Fahrzeuges **20** abzuleiten, welche mit der Anzahl der ersten Sensorpixel **211,** welche sich aus den zwei Detektions-Raumwinkeln **DRb, DRd,** bei welchen der Schwellenwert überschritten ist, und den zwischen diesen zwei Detektions-Raumwinkeln liegenden Detektions-Raumwinkel **DRc** zusammensetzt, korrespondiert, und mit einer tatsächlichen Objektbreite zu vergleichen, welche tatsächliche Objektbreite mittels einer Laufzeitmessung und/oder Triangulationsmessung des an dem Fahrzeug **20** reflektierenden Laserstrahls **410** durch den zweiten Lichtsensor **220** ermittelbar ist.

Wenn die vermutliche Objektbreite nun mit der tatsächlichen Objektbreite übereinstimmt, so ist die Steuereinrichtung **300** eingerichtet, den Lichtstrom der entsprechenden Leuchtpixel-Gruppen **110b, 110c, 110d,** welche den ersten Sensorpixeln **211** der vermutlichen Objektbreite zugeordnet sind, trotz eines fehlenden Überschreitens des Schwellenwertes in dem Detektions-Raumwinkel **DRc** zwischen den Detektions-Raumwinkeln **DRb, DRd,** bei welchen der Schwellenwert überschritten ist, zu reduzieren.

Zusätzlich ist die Steuereinheit **300** eingerichtet, den Abstand des vor der Beleuchtungsvorrichtung **10** vorhandenen lichtabstrahlenden Objekts **20** zur Beleuchtungsvorrichtung **10** mittels einer Laufzeitmessung und/oder Triangulationsmessung mit Hilfe des zweiten Lichtsensors **220** zu ermitteln.

Ferner kann die Beleuchtungsvorrichtung **10** zur Aufweitung des Laserstrahls **410** der Lasererzeugungseinheit **400** eine Aufweitungsoptik umfassen, wobei die Aufweitungsoptik als Zylinderlinse ausgebildet ist, welche eingerichtet ist, den Laserstrahl **410** der Laserstrahlerzeugungseinrichtung **400** in vertikaler Richtung aufzuweiten.

Bei der Triangulationsmessung ist der Abstand zwischen der Lasererzeugungseinheit **400** und den einzelnen zweiten Sensorpixeln **221** des zweiten Lichtsensors **220** bekannt, wobei ebenso der Winkel, in welchem der Laserstrahl in seiner zumindest einen Zeile emittiert wird, bekannt ist und durch die Steuereinheit **300** ermittelbar bzw. abrufbar ist. Ferner ist ebenso der Winkel des an dem Objekt reflektierenden Laserstrahls erfassbar, beispielsweise durch den entsprechenden zweiten Sensorpixel **221** des zweiten Lichtsensors **220** und dadurch bekannt, wodurch der Abstand des Bereichs des Objekts, welcher Bereich von dem Laserstrahl getroffen und reflektiert wird, durch die Steuereinheit ermittelbar bzw. ausrechenbar ist.

Ferner kann vorgesehen sein, dass im Falle, dass in einem Detektions-Raumwinkel **DRa, DRb, DRc** ein Überschreiten des Schwellenwertes festgestellt wird, die Steuereinheit eingerichtet ist, eine vermutliche Objektbreite abzuleiten, welche mit dem ersten Sensorpixel **211** korrespondiert, bei welchem der Schwellenwert überschritten ist, und mit einer tatsächlichen Objektbreite zu vergleichen, welche tatsächlich Objektbreite mittels einer Laufzeitmessung und/oder Triangulationsmessung des an dem Objekt **20** reflektierenden Laserstrahls **410** durch den zweiten Lichtsensor **220** ermittelbar ist, wobei die tatsächliche Objektbreite mit der Anzahl der zweiten Sensorpixel korrespondiert, bei welcher Licht des an dem Objekt reflektierenden Laserstrahles erfasst wird, wobei wenn
die tatsächlich Objektbreite größer ist als die vermutliche Objektbreite, die Steuereinrichtung eingerichtet ist, den Lichtstrom jener Leuchtpixel-Gruppen **110a, 110b, 110c** zu reduzieren, welche mit dem ersten Sensorpixel, bei welchem der Schwellenwert überschritten wurde, und mit jenen ersten Sensorpixeln **211** korrespondieren, deren Detektions-Raumwinkel unmittelbar benachbart zu jenem Detektions-Raumwinkel ist, bei welchen ein Überschreiten des Schwellenwertes festgestellt wurde, oder den ersten Sensorpixeln, welche mit den zweiten Sensorpixeln korrespondieren, bei welchen die tatsächliche Objektbreite ermittelt wurde.

### BEZUGSZEICHENLISTE

| | |
|---|---|
| Beleuchtungsvorrichtung | 10 |
| Objekt, Fahrzeug | 20 |
| Grundträger | 50 |
| Lichterzeugungseinheit | 100 |
| Leuchtpixel | 110 |
| Leuchtpixel-Gruppen | 110a, 110b, 110c, 110d |
| Lichtsensorvorrichtung | 200 |
| Erster Lichtsensor | 210 |
| Erste Sensorpixel | 211 |
| Zweiter Lichtsensor | 220 |
| Zweite Sensorpixel | 221 |
| Steuereinheit | 300 |
| Lasererzeugungseinheit | 400 |
| Laserstrahl | 410 |
| Leucht-Raumwinkel | LRa, LRb, LRc, LRd |
| Detektions-Raumwinkel | DRa, DRb, DRc, DRd |
| Erkennungs-Raumwinkel | ERa, ERb, ERc, ERd |

## Patentansprüche

1. Beleuchtungsvorrichtung (10) für einen Kraftfahrzeugscheinwerfer zum Erkennen und
gezielten Ausblenden eines vor der Beleuchtungsvorrichtung (10) vorhandenen, Licht abstrahlenden Objekts (20) in einer segmentierten Lichtverteilung, welche
Beleuchtungsvorrichtung (10) Folgendes umfasst:
- eine Lichterzeugungseinheit (100), welche mehrere Leuchtpixel (110) umfasst, welche in einem Leuchtpixel-Array in einer oder mehreren Zeilen und Spalten angeordnet sind, wobei die Lichterzeugungseinheit (100) eingerichtet ist, eine segmentierte Lichtverteilung in eine Hauptabstrahlrichtung vor der Beleuchtungsvorrichtung (10) abzustrahlen,
- eine Lichtsensorvorrichtung (200) zum Erkennen von Licht eines Licht abstrahlenden Objekts (20) mit einem ersten Lichtsensor (210), welcher erste Lichtsensor (210) mehrere erste Sensorpixel (211) aufweist, welche in einer Zeile angeordnet sind, wobei die ersten Sensorpixel (211) eingerichtet sind, Lichtstrom von auf den ersten Lichtsensor (210) einfallendem Licht in einem Wellenlängenbereich von 380 nm bis 780 nm zu erfassen,
- eine Steuereinheit (300), welche mit der Lichterzeugungseinheit (100) und der Lichtsensorvorrichtung (200) verbunden ist und eingerichtet ist, die Lichterzeugungseinheit (100) zur Erzeugung der segmentierten Lichtverteilung anzusteuern,
wobei die Leuchtpixel (110) des Leuchtpixel-Arrays in mehrere Leuchtpixel-Gruppen (110a, 110b, 110c, 110d) unterteilt sind, wobei jeweils eine Leuchtpixel-Gruppe (110a, 110b, 110c, 110d) ein Segment der segmentierten Lichtverteilung in einem Leucht-Raumwinkel (LRa, LRb, LRc, LRd) erzeugen kann, wobei jede Leuchtpixel-Gruppe zumindest ein Leuchtpixel (110) umfasst,
und wobei jeweils ein Sensorpixel von den mehreren ersten Sensorpixeln (211) Licht in einem dem jeweiligen Sensorpixel (211) zugeordneten Detektions-Raumwinkel (DRa, DRb, DRc, DRd) detektieren kann und jeweils einer Leuchtpixel-Gruppe (110a, 110b, 110c, 110d) zugeordnet ist, wobei jedem Sensorpixel der mehreren ersten Sensorpixel (211) ein unterschiedlicher Detektions-Raumwinkel zugeordnet ist, wobei die Detektions-Raumwinkel (DRa, DRb, DRc, DRd) im Wesentlichen aneinander angrenzen und einen Gesamt-Detektions-Raumwinkel bilden, in welchen Licht des Licht abstrahlenden Objekts (20) erkannt werden kann, und wobei das auf jeden ersten Sensorpixel (211) einfallende Licht als dem jeweiligen ersten Sensorpixel (211) zugeordneten Lichtstromwert erfassbar ist,
wobei der von einem ersten Sensorpixel (211) detektierbare Detektions-Raumwinkel (DRa, DRb, DRc, DRd) im Wesentlichen ident ist mit dem Leucht-Raumwinkel (LRa, LRb, LRc, LRd) der jeweils zugeordneten Leuchtpixel-Gruppe (110a, 110b, 100c, 110d),
**dadurch gekennzeichnet, dass**
die Lichterzeugungseinheit (100), die Lichtsensorvorrichtung (200) und die Steuereinheit (300) gemeinsam auf einem Grundträger (50) angeordnet sind, und gemeinsam mit dem Grundträger (50) eine Baueinheit bilden,
wobei die Beleuchtungsvorrichtung (10) zur Abstandsmessung des vor der Beleuchtungsvorrichtung (10) vorhandenen Objekts (20) eine Laserstrahlerzeugungseinrichtung (400) aufweist, welche eingerichtet ist, zumindest einen Laserstrahl (410) in einem Wellenlängenbereich von 780 nm bis 12 µm vor die Beleuchtungsvorrichtung (10) abzustrahlen und in horizontaler Orientierung zu verändern,
wobei die Lichtsensorvorrichtung (200) zusätzlich einen zweiten Lichtsensor (220) umfasst, welcher zweite Lichtsensor (220) mehrere zweite Sensorpixel (221) umfasst, welche in einer Zeile angeordnet sind, wobei die zweiten Sensorpixel (221) eingerichtet sind, Lichtstrom im Wellenlängenbereich des Laserstrahls (410) der Laserstrahlerzeugungseinheit (400) von auf den zweiten Lichtsensor (220) einfallendem Licht zu erfassen,
und wobei die Steuereinheit (300) eingerichtet ist, die von den jeweiligen ersten Sensorpixeln (211) detektierten Lichtstromwerte einzeln mit einem jeweils festlegbaren Schwellwert zu vergleichen und bei einem Überschreiten des Schwellenwertes den Lichtstrom der entsprechenden Leuchtpixel-Gruppen (110a, 110b, 110c, 110d) zu reduzieren,
wobei im Falle, dass in zwei Detektions-Raumwinkeln (DRa, DRc) ein Überschreiten des Schwellenwertes festgestellt wird und in zumindest einem zwischen dieser zwei Detektions-Raumwinkeln (DRa, DRc) ein Detektions-Raumwinkel (DRb) keine Überschreitung des Schwellenwertes festgestellt wird, die Steuereinheit (300) eingerichtet ist, eine vermutliche Objektbreite abzuleiten, welche mit der Anzahl der ersten Sensorpixel (211), welche sich aus den zwei Detektions-Raumwinkeln (DRa, DRc), bei welchen der Schwellenwert überschritten ist, und den zwischen diesen zwei Detektions-Raumwinkeln liegenden Detektions-Raumwinkeln (DRc) zusammensetzt, korrespondiert, und mit einer tatsächlichen Objektbreite zu vergleichen, welche tatsächliche Objektbreite mittels einer Laufzeitmessung und/oder Triangulationsmessung des an dem Objekt (20) reflektierenden Laserstrahls (410) durch den zweiten Lichtsensor (220) ermittelbar ist,
wobei wenn die vermutliche Objektbreite mit der tatsächlichen Objektbreite übereinstimmt, die Steuereinrichtung (300) eingerichtet ist, den Lichtstrom der entsprechenden Leuchtpixel-Gruppen (110a, 110b, 110c), welche den ersten Sensorpixeln (211) der vermutlichen Objektbreite zugeordnet sind, trotz eines fehlenden Überschreitens des Schwellenwertes in den Detektions-Raumwinkeln (DRb) zwischen den Detektions-Raumwinkeln (DRa, DRc), bei welchen der Schwellenwert überschritten ist, zu reduzieren,
und/oder
im Falle, dass in einem Detektions-Raumwinkel (DRa, DRb, DRc) ein Überschreiten des Schwellenwertes festgestellt wird, die Steuereinheit eingerichtet ist, eine vermutliche Objektbreite abzuleiten, welche mit dem ersten Sensorpixel (211) korrespondiert, bei welchem der Schwellenwert überschritten ist, und mit einer tatsächlichen Objektbreite zu vergleichen, welche tatsächlich Objektbreite mittels einer Laufzeitmessung und/oder Triangulationsmessung des an dem Objekt (20) reflektierenden Laserstrahls (410) durch den zweiten Lichtsensor (220) ermittelbar ist, wobei die tatsächliche Objektbreite mit der Anzahl der zweiten Sensorpixel korrespondiert, bei welcher Licht des an dem Objekt reflektierenden Laserstrahles erfasst wird, wobei wenn
die tatsächlich Objektbreite größer ist als die vermutliche Objektbreite, die Steuereinrichtung eingerichtet ist, den Lichtstrom jener Leuchtpixel-Gruppen (110a, 110b, 110c) zu reduzieren, welche mit dem ersten Sensorpixel, bei welchem der Schwellenwert überschritten wurde, und mit jenen ersten Sensorpixeln (211) korrespondieren, deren Detektions-Raumwinkel unmittelbar benachbart zu jenem Detektions-Raumwinkel ist, bei welchen ein Überschreiten des Schwellenwertes festgestellt wurde, oder den ersten Sensorpixeln, welche mit den zweiten Sensorpixeln korrespondieren, bei welchen die tatsächliche Objektbreite ermittelt wurde.

2. Beleuchtungsvorrichtung nach Anspruch 1, **dadurch gekennzeichnet, dass** jeweils ein Sensorpixel von den mehreren zweiten Sensorpixeln (221) Licht in einem dem jeweiligen Sensorpixel (221) zugeordneten Erkennungs-Raumwinkel (ERa, ERb, ERc, ERd) detektieren kann und jeweils einem Sensorpixel der mehreren ersten Sensorpixel (211) zugeordnet ist, wobei der Erkennungs-Raumwinkel dieses zweiten Sensorpixels (221) im Wesentlichen ident zum entsprechenden Detektions-Raumwinkel (DRa, DRb, DRc, DRd) des ersten Sensorpixels (211) ist.

3. Beleuchtungsvorrichtung nach einem der Ansprüche 1 oder 2, **dadurch gekennzeichnet, dass** der zumindest eine Laserstrahl (410) der Laserstrahlerzeugungseinrichtung (400) scannend vor der Beleuchtungsvorrichtung (10) in zumindest einer horizontalen Zeile emittierbar ist.

4. Beleuchtungsvorrichtung nach Anspruch 3, **dadurch gekennzeichnet, dass** der Laserstrahl (410) in zumindest zwei, vorzugsweise vier, Zeilen abwechselnd emittierbar ist, wobei der Laserstrahl (410) jeweils nur in eine der zumindest zwei Zeilen scannend emittierbar ist.

5. Beleuchtungsvorrichtung nach einem der Ansprüche 1 bis 4, **dadurch gekennzeichnet, dass** die Anzahl der ersten Sensorpixel (211) gleich der Anzahl der zweiten Sensorpixel (221) ist.

6. Beleuchtungsvorrichtung nach einem der Ansprüche 1 bis 5, **dadurch gekennzeichnet, dass** die Steuereinheit (300) eingerichtet ist, den Abstand des vor der Beleuchtungsvorrichtung (10) vorhandenen lichtabstrahlenden Objekts (20) zur Beleuchtungsvorrichtung (10) mittels einer Laufzeitmessung und/oder Triangulationsmessung mit Hilfe des zweiten Lichtsensors (220) zu ermitteln.

7. Beleuchtungsvorrichtung nach einem der Ansprüche 1 bis 6, **dadurch gekennzeichnet, dass** die segmentierte Lichtverteilung als segmentierte Fernlichtverteilung ausgebildet ist.

8. Beleuchtungsvorrichtung nach einem der Ansprüche 1 bis 7, **dadurch gekennzeichnet, dass** die Beleuchtungsvorrichtung (10) zur Aufweitung des Laserstrahls (410) der Lasererzeugungseinheit (400) eine Aufweitungsoptik umfasst.

9. Beleuchtungsvorrichtung nach Anspruch 8, **dadurch gekennzeichnet, dass** die Aufweitungsoptik als Zylinderlinse ausgebildet ist, welche eingerichtet ist, den Laserstrahl (410) der Lasererzeugungseinrichtung (400) in vertikaler Richtung aufzuweiten.

10. Beleuchtungsvorrichtung nach einem der Ansprüche 1 bis 9, **dadurch gekennzeichnet, dass** die ersten Sensorpixeln (211) und die zweiten Sensorpixeln (221) in Einbaulage der Beleuchtungsvorrichtung übereinander in jeweils einer Zeile auf einer gemeinsamen Leiterplatte und besonders bevorzugt, dass die ersten Sensorpixel und die zweiten Sensorpixel auf dem selben Sensorchip angeordnet sind, und wobei die Beleuchtungsvorrichtung eine Sensorlinse umfasst, welcher den ersten und zweiten Sensorpixeln (211, 221) zugeordnet ist.

11. Beleuchtungsvorrichtung nach Anspruch 10, **dadurch gekennzeichnet, dass** die Sensorlinse als Zylinderlinse ausgebildet ist.

12. Beleuchtungsvorrichtung nach Anspruch 10 oder 11, **dadurch gekennzeichnet, dass** die ersten Sensorpixeln (211) einen ersten Filter aufweisen, welcher eingerichtet ist, Licht ausschließlich im Wellenlängenbereich von 380 nm bis 780 nm zu transmittieren, wobei die zweiten Sensorpixel (221) einen zweiten Filter aufweisen, welcher eingerichtet ist, Licht ausschließlich im Wellenlängenbereich von 780 nm bis 12 µm zu transmittieren.

13. Beleuchtungsvorrichtung nach einem der Ansprüche 1 bis 12, **dadurch gekennzeichnet, dass** der zumindest eine Laserstrahl der Laserstrahlerzeugungseinrichtung (400) moduliert ist.

14. Kraftfahrzeugscheinwerfer umfassend zumindest einer Beleuchtungsvorrichtung nach einem der Ansprüche 1 bis 13.

## Claims

1. Illumination device (10) for a motor vehicle headlamp for detecting and selectively masking a light-emitting object (20) present in front of the lighting device (10) in a segmented light distribution, which lighting device (10) comprises
- a light generating unit (100) comprising a plurality of light pixels (110) arranged in a light pixel array in one or more rows and columns, wherein the light generating unit (100) is arranged to emit a segmented light distribution in a main emitting direction in front of the lighting device (10),
- a light sensor device (200) for detecting light from a light-emitting object (20), having a first light sensor (210), which first light sensor (210) has a plurality of first sensor pixels (211) which are arranged in a line, the first sensor pixels (211) being set up to detect luminous flux from light incident on the first light sensor (210) in a wavelength range from 380 nm to 780 nm,
- a control unit (300) which is connected to the light generating unit (100) and the light sensor device (200) and is arranged to control the light generating unit (100) to generate the segmented light distribution,
wherein the light pixels (110) of the light pixel array are subdivided into a plurality of light pixel groups (110a, 110b, 110c, 110d), wherein each light pixel group (110a, 110b, 110c, 110d) can generate a segment of the segmented light distribution at a light-space angle (LRa, LRb, LRc, LRd), wherein each light-pixel group comprises at least one light pixel (110),
and wherein a respective sensor pixel of the plurality of first sensor pixels (211) can generate light at a detection solid angle (DRa, DRb, DRc, DRd) assigned to the respective sensor pixel (211) and is assigned to a respective light emitting pixel group (110a, 110b, 110c, 110d), wherein a different detection-space angle is assigned to each sensor pixel of the plurality of first sensor pixels (211), wherein the detection solid angles (DRa, DRb, DRc, DRd) are substantially adjacent to each other and form an overall detection solid angle, in which light from the light-emitting object (20) can be detected, and wherein the light incident on each first sensor pixel (211) can be detected as a luminous flux value assigned to the respective first sensor pixel (211),
wherein the detection solid angle (DRa, DRb, DRc, DRd) detectable by a first sensor pixel (211) is substantially identical to the luminous-space angle (LRa, LRb, LRc, LRd) of the respectively associated luminous pixel group (110a, 110b, 100c, 110d),
**characterized in that**
the light generating unit (100), the light sensor device (200) and the control unit (300) are arranged together on a base support (50) and together with the base support (50) form a structural unit,
the illumination device (10) having a laser beam generating device (400) for measuring the distance of the object (20) present in front of the illumination device (10), which is set up to emit at least one laser beam (410) in a wavelength range from 780 nm to 12 µm in front of the illumination device (10) and to change its horizontal orientation,
wherein the light sensor device (200) additionally comprises a second light sensor (220), which second light sensor (220) comprises a plurality of second sensor pixels (221) which are arranged in a line, wherein the second sensor pixels (221) are set up to detect luminous flux in the wavelength range of the laser beam (410) of the laser beam generating unit (400) from light incident on the second light sensor (220),
and wherein the control unit (300) is set up to detect the light flux in the wavelength range of the laser beam (410) of the laser beam generating unit (400), comparing the luminous flux values detected by the respective first sensor pixels (211) individually with a respectively determinable threshold value and, if the threshold value is exceeded, reducing the luminous flux of the corresponding light pixel groups (110a, 110b, 110c, 110d),
wherein in the event that an exceeding of the threshold value is determined in two detection solid angles (DRa, DRc) and no exceeding of the threshold value is determined in at least one detection solid angle (DRb) between these two detection solid angles (DRa, DRc), the control unit (300) is set up to derive a presumed object width, which corresponds to the number of first sensor pixels (211), which is composed of the two detection solid angles (DRa, DRc) at which the threshold value is exceeded and the detection solid angles (DRc) lying between these two detection solid angles, and to compare it with an actual object width, which actual object width can be determined by means of a time-of-flight measurement and/or triangulation measurement of the laser beam (410) reflecting on the object (20) by the second light sensor (220),
wherein, if the presumed object width corresponds to the actual object width, the control device (300) is set up to adjust the luminous flux of the corresponding luminous pixel groups (110a, 110b, 110c), which are assigned to the first sensor pixels (211) of the presumed object width, despite the threshold value not being exceeded in the detection solid angles (DRb) between the detection solid angles (DRa, DRc) at which the threshold value is exceeded,
and/or
in the event that the threshold value is exceeded in a detection solid angle (DRa, DRb, DRc), the control unit is set up to derive a presumed object width which corresponds to the first sensor pixel (211) at which the threshold value is exceeded, and to compare it with an actual object width, which actual object width can be determined by means of a time-of-flight measurement and/or triangulation measurement of the laser beam (410) reflecting on the object (20) by the second light sensor (220), the actual object width corresponding to the number of second sensor pixels, at which light of the laser beam reflecting on the object is detected, wherein if
the actual object width is greater than the presumed object width, the control device is set up to reduce the luminous flux of those light pixel groups (110a, 110b, 110c) which correspond to the first sensor pixel at which the threshold value was exceeded, and correspond to those first sensor pixels (211) whose detection solid angle is immediately adjacent to the detection solid angle at which the threshold value has been exceeded, or the first sensor pixels which correspond to the second sensor pixels at which the actual object width has been determined.

2. Illumination device according to claim 1, **characterized in that** in each case one sensor pixel of the plurality of second sensor pixels (221) can detect light at a recognition solid angle (ERa, ERb, ERc, ERd) associated with the respective sensor pixel (221) and is associated with a respective sensor pixel of the plurality of first sensor pixels (211), wherein the detection solid angle of this second sensor pixel (221) is substantially identical to the corresponding detection solid angle (DRa, DRb, DRc, DRd) of the first sensor pixel (211).

3. Illumination device according to one of claims 1 or 2, **characterized in that** the at least one laser beam (410) of the laser beam generating device (400) is emittable in front of the illumination device (10) in at least one horizontal line in a scanning manner.

4. Illumination device according to claim 3, **characterized in that** the laser beam (410) can be emitted alternately in at least two, preferably four, lines, wherein the laser beam (410) can be emitted scanning in only one of the at least two lines in each case.

5. Illumination device according to one of claims 1 to 4, **characterized in that** the number of first sensor pixels (211) is equal to the number of second sensor pixels (221).

6. Illumination device according to one of claims 1 to 5, **characterized in that** the control unit (300) is set up to determine the distance of the light-emitting object (20) present in front of the illumination device (10) to the illumination device (10) by means of a time-of-flight measurement and/or triangulation measurement with the aid of the second light sensor (220).

7. Illumination device according to one of claims 1 to 6, **characterized in that** the segmented light distribution is designed as a segmented main beam distribution.

8. Illumination device according to one of claims 1 to 7, **characterized in that** the illumination device (10) comprises an expansion optics for expanding the laser beam (410) of the laser generation unit (400).

9. Illumination device according to claim 8, **characterized in that** the expansion optics is designed as a cylindrical lens which is set up to expand the laser beam (410) of the laser generation unit (400) in the vertical direction.

10. Illumination device according to one of claims 1 to 9, **characterized in that** the first sensor pixels (211) and the second sensor pixels (221) are arranged one above the other in one line each on a common printed circuit board in the installation position of the illumination device, and particularly preferably **in that** the first sensor pixels and the second sensor pixels are arranged on the same sensor chip, and wherein the illumination device comprises a sensor lens which is assigned to the first and second sensor pixels (211, 221).

11. Illumination device according to claim 10, **characterized in that** the sensor lens is designed as a cylindrical lens.

12. Illumination device according to claim 10 or 11, **characterized in that** the first sensor pixels (211) have a first filter which is set up to transmit light exclusively in the wavelength range from 380 nm to 780 nm, the second sensor pixels (221) having a second filter which is set up to transmit light exclusively in the wavelength range from 780 nm to 12 µm.

13. Illumination device according to any one of claims 1 to 12, **characterized in that** the at least one laser beam of the laser beam generating device (400) is modulated.

14. Motor vehicle headlamp comprising at least one illumination device according to any one of claims 1 to 13.

## Revendications

1. Dispositif d'éclairage (10) pour un projecteur de véhicule automobile destiné à détecter et à masquer de manière ciblée un objet (20) émettant de la lumière présent devant le dispositif d'éclairage (10) dans une répartition de lumière segmentée, lequel dispositif d'éclairage (10) comprend ce qui suit :
- une unité de génération de lumière (100) comprenant une pluralité de pixels lumineux (110) disposés dans un réseau de pixels lumineux dans une ou plusieurs lignes et colonnes, l'unité de génération de lumière (100) étant adaptée pour émettre une distribution de lumière segmentée dans une direction d'émission principale devant le dispositif d'éclairage (10),
- un dispositif capteur de lumière (200) pour détecter la lumière d'un objet (20) émettant de la lumière avec un premier capteur de lumière (210), lequel premier capteur de lumière (210) présente plusieurs premiers pixels de capteur (211) qui sont disposés en une ligne, les premiers pixels de capteur (211) étant adaptés pour détecter le flux lumineux de la lumière incidente sur le premier capteur de lumière (210) dans une plage de longueurs d'onde de 380 nm à 780 nm,
- une unité de commande (300) qui est reliée à l'unité de génération de lumière (100) et au dispositif de capteur de lumière (200) et qui est conçue pour commander l'unité de génération de lumière (100) pour générer la répartition segmentée de la lumière,
les pixels lumineux (110) du réseau de pixels lumineux étant divisés en plusieurs groupes de pixels lumineux (110a, 110b, 110c, 110d), un groupe de pixels lumineux (110a, 110b, 110c, 110d) peut produire un segment de la distribution de lumière segmentée dans un angle solide d'éclairage (LRa, LRb, LRc, LRd), chaque groupe de pixels lumineux comprenant au moins un pixel lumineux (110),
et dans lequel un pixel de détection respectif de la pluralité de premiers pixels de détection (211) peut produire de la lumière dans un angle solide de détection (DRa, DRb, DRc, DRd) et est associé respectivement à un groupe de pixels lumineux (110a, 110b, 110c, 110d), un angle solide de détection différent étant associé à chaque pixel de capteur de la pluralité de premiers pixels de capteur (211), les angles solides de détection (DRa, DRb, DRc, DRd) étant sensiblement contigus et formant un angle solide de détection total, dans lesquels la lumière de l'objet (20) émettant de la lumière peut être détectée, et dans lequel la lumière incidente sur chaque premier pixel de capteur (211) peut être détectée en tant que valeur de flux lumineux associée au premier pixel de capteur (211) respectif,
l'angle solide de détection (DRa, DRb, DRc, DRd) pouvant être détecté par un premier pixel de capteur (211) étant sensiblement identique à l'angle solide d'éclairage (LRa, LRb, LRc, LRd) du groupe de pixels d'éclairage (110a, 110b, 100c, 110d) respectivement associé,
**caractérisé en ce que**
l'unité de génération de lumière (100), le dispositif capteur de lumière (200) et l'unité de commande (300) sont disposés ensemble sur un support de base (50) et forment ensemble avec le support de base (50) une unité de construction,
le dispositif d'éclairage (10) présentant pour la mesure de la distance de l'objet (20) présent devant le dispositif d'éclairage (10) un dispositif de génération de rayon laser (400), qui est conçu pour émettre au moins un faisceau laser (410) dans une plage de longueurs d'onde de 780 nm à 12 µm devant le dispositif d'éclairage (10) et pour le modifier dans son orientation horizontale,
le dispositif de détection de lumière (200) comprenant en outre un deuxième capteur de lumière (220), lequel deuxième capteur de lumière (220) comprend plusieurs deuxièmes pixels de capteur (221) qui sont disposés en une ligne, les deuxièmes pixels de capteur (221) étant conçus pour détecter le flux lumineux dans la plage de longueurs d'onde du faisceau laser (410) de l'unité de génération de faisceau laser (400) de la lumière incidente sur le deuxième capteur de lumière (220),
et l'unité de commande (300) étant conçue, comparer individuellement les valeurs de flux lumineux détectées par les premiers pixels de capteur respectifs (211) avec une valeur de seuil pouvant être fixée à chaque fois et, en cas de dépassement de la valeur de seuil, réduire le flux lumineux des groupes de pixels lumineux correspondants (110a, 110b, 110c, 110d),
dans lequel, dans le cas où un dépassement de la valeur seuil est constaté dans deux angles solides de détection (DRa, DRc) et dans au moins un angle solide de détection (DRb) entre ces deux angles solides de détection (DRa, DRc), aucun dépassement de la valeur seuil n'est constaté, l'unité de commande (300) est agencée pour déduire une largeur d'objet présumée, qui correspond au nombre des premiers pixels de capteur (211), lequel se compose des deux angles solides de détection (DRa, DRc) pour lesquels la valeur seuil est dépassée et des angles solides de détection (DRc) situés entre ces deux angles solides de détection, et à comparer avec une largeur d'objet réelle, laquelle largeur d'objet réelle peut être déterminée par le deuxième capteur de lumière (220) au moyen d'une mesure du temps de propagation et/ou d'une mesure par triangulation du rayon laser (410) réfléchi sur l'objet (20),
le dispositif de commande (300) étant conçu, lorsque la largeur d'objet supposée correspond à la largeur d'objet réelle, pour augmenter le flux lumineux des groupes de pixels lumineux correspondants (110a, 110b, 110c) associés aux premiers pixels de capteur (211) de la largeur d'objet présumée, malgré l'absence de dépassement de la valeur de seuil dans les angles solides de détection (DRb) entre les angles solides de détection (DRa, DRc) auxquels la valeur de seuil est dépassée,
et/ou
dans le cas où un dépassement de la valeur seuil est constaté dans un angle solide de détection (DRa, DRb, DRc), l'unité de commande est agencée pour déduire une largeur d'objet présumée qui correspond au premier pixel de capteur (211) pour lequel la valeur seuil est dépassée, et à comparer avec une largeur d'objet réelle, laquelle largeur d'objet réelle peut être déterminée au moyen d'une mesure du temps de propagation et/ou d'une mesure de triangulation du rayon laser (410) réfléchi sur l'objet (20) par le deuxième capteur de lumière (220), la largeur d'objet réelle correspondant au nombre des deuxièmes pixels de capteur, à laquelle la lumière du faisceau laser réfléchie par l'objet est détectée, dans lequel, lorsque
la largeur réelle de l'objet est supérieure à la largeur supposée de l'objet, le dispositif de commande est agencé pour réduire le flux lumineux des groupes de pixels lumineux (110a, 110b, 110c) qui sont associés au premier pixel de capteur pour lequel la valeur seuil a été dépassée, et les premiers pixels de capteur (211) dont l'angle solide de détection est immédiatement adjacent à l'angle solide de détection pour lequel un dépassement de la valeur de seuil a été détecté, ou les premiers pixels de capteur qui correspondent aux deuxièmes pixels de capteur pour lesquels la largeur réelle de l'objet a été déterminée.

2. Dispositif d'éclairage selon la revendication 1, **caractérisé en ce qu'**un pixel de détection de chacun de la pluralité de deuxièmes pixels de détection (221) reçoit de la lumière selon un angle solide de détection (ERa, ERb, ERc, ERd) et associé respectivement à un pixel de détection de la pluralité de premiers pixels de détection (211), l'angle solide de détection de ce deuxième pixel de détection (221) étant sensiblement identique à l'angle solide de détection correspondant (DRa, DRb, DRc, DRd) du premier pixel de détection (211).

3. Dispositif d'éclairage selon l'une des revendications 1 ou 2, **caractérisé en ce que** ledit au moins un faisceau laser (410) du dispositif de génération de faisceau laser (400) est apte à être émis en balayage devant le dispositif d'éclairage (10) selon au moins une ligne horizontale.

4. Dispositif d'éclairage selon la revendication 3, **caractérisé en ce que** le faisceau laser (410) peut être émis en alternance dans au moins deux, de préférence quatre, lignes, le faisceau laser (410) ne pouvant être émis en balayage que dans l'une des au moins deux lignes à la fois.

5. Dispositif d'éclairage selon l'une des revendications 1 à 4, **caractérisé en ce que** le nombre de premiers pixels de détection (211) est égal au nombre de seconds pixels de détection (221).

6. Dispositif d'éclairage selon l'une des revendications 1 à 5, **caractérisé en ce que** l'unité de commande (300) est agencée pour déterminer la distance de l'objet (20) émettant de la lumière présent devant le dispositif d'éclairage (10) par rapport au dispositif d'éclairage (10) au moyen d'une mesure de temps de parcours et/ou d'une mesure de triangulation à l'aide du deuxième capteur de lumière (220).

7. Dispositif d'éclairage selon l'une des revendications 1 à 6, **caractérisé en ce que** la distribution de lumière segmentée est conçue comme une distribution de lumière segmentée à distance.

8. Dispositif d'éclairage selon l'une des revendications 1 à 7, **caractérisé en ce que** le dispositif d'éclairage (10) comprend une optique d'élargissement pour élargir le faisceau laser (410) de l'unité de génération laser (400).

9. Dispositif d'éclairage selon la revendication 8, **caractérisé en ce que** l'optique de dilatation est réalisée sous la forme d'une lentille cylindrique qui est agencée pour dilater le faisceau laser (410) de l'unité de génération de laser (400) dans la direction verticale.

10. Dispositif d'éclairage selon l'une quelconque des revendications 1 à 9, **caractérisé en ce que** les premiers pixels de détection (211) et les deuxièmes pixels de détection (221) sont disposés, en position de montage du dispositif d'éclairage, l'un au-dessus de l'autre, chacun sur une ligne, sur une carte de circuit imprimé commune et, de manière particulièrement préférée, **en ce que** les premiers pixels de détection et les deuxièmes pixels de détection sont disposés sur la même puce de détection, et le dispositif d'éclairage comprenant une lentille de détection qui est associée aux premiers et deuxièmes pixels de détection (211, 221).

11. Dispositif d'éclairage selon la revendication 10, **caractérisé en ce que** la lentille de détection est une lentille cylindrique.

12. Dispositif d'éclairage selon la revendication 10 ou 11, **caractérisé en ce que** les premiers pixels de détection (211) comportent un premier filtre agencé pour transmettre la lumière exclusivement dans la gamme de longueurs d'onde de 380 nm à 780 nm, les deuxièmes pixels de détection (221) comportant un deuxième filtre agencé pour transmettre la lumière exclusivement dans la gamme de longueurs d'onde de 780 nm à 12 µm.

13. Dispositif d'éclairage selon l'une des revendications 1 à 12, **caractérisé en ce que** ledit au moins un faisceau laser du dispositif de génération de faisceau laser (400) est modulé.

14. Projecteur de véhicule automobile comprenant au moins un dispositif d'éclairage selon l'une quelconque des revendications 1 à 13.
